(19) Europäisches Patentamt / European Patent Office / Office européen des brevets

(11) **EP 2 936 666 B1**

(12) **FASCICULE DE BREVET EUROPEEN**

(45) Date de publication et mention de la délivrance du brevet:
**02.02.2022 Bulletin 2022/05**

(21) Numéro de dépôt: **13808034.6**

(22) Date de dépôt: **18.12.2013**

(51) Classification Internationale des Brevets (IPC):
**H02K 55/00** $^{(2006.01)}$

(52) Classification Coopérative des Brevets (CPC):
**H02K 55/00;** Y02E 40/60

(86) Numéro de dépôt international:
**PCT/EP2013/077104**

(87) Numéro de publication internationale:
**WO 2014/096011 (26.06.2014 Gazette 2014/26)**

(54) **MACHINE ÉLECTRIQUE À BOBINES SUPRACONDUCTRICES**

ELEKTRISCHE MASCHINE MIT SUPRALEITENDEN WICKLUNGEN

ELECTRIC MACHINE WITH SUPERCONDUCTIVE WINDINGS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2012 FR 1262478**

(43) Date de publication de la demande:
**28.10.2015 Bulletin 2015/44**

(73) Titulaire: **AIRBUS (SAS)**
**31700 Blagnac (FR)**

(72) Inventeurs:
• **SMAOUI, Hichem**
  **F-75014 Paris (FR)**
• **NESPOULOUS, Charles**
  **F-92210 Saint-Cloud (FR)**
• **RECHAIN, Bruno**
  **F-75015 Paris (FR)**
• **JOUBERT, Emmanuel**
  **F-92130 Issy Les Moulineaux (FR)**

(74) Mandataire: **Gicquel, Olivier Yves Gérard et al**
**Airbus Opérations (S.A.S)**
**XIF - M0101/1**
**316, route de Bayonne**
**31060 Toulouse Cedex (FR)**

(56) Documents cités:
**DE-A1- 19 710 501      US-A1- 2010 164 309**

• **Thorsten Strasser: "Magnetische Charakterisierung von schmelztexturierten YBa2Cu3O7-x-Hochtemperatur-Supraleitern", 31 décembre 1999 (1999-12-31), Papierflieger, Clausthal-Zellerfeld, XP002717784, ISBN: 3-89720-234-4 pages 66-69, pages 66-68; figures 6-1**

EP 2 936 666 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention appartient au domaine des machines électromécaniques, moteurs ou générateurs, dont en fonctionnement les bobines sont maintenues à très basses températures.

Plus particulièrement l'invention concerne une machine électromécanique dont les températures des enroulements des bobines sont maintenues à des températures suffisamment basses pour en assurer le fonctionnement supraconducteur de ces bobines.

La supraconductivité électrique est un phénomène bien connu qui prend naissance dans certains matériaux et rend leur résistivité électrique pratiquement nulle.

Cette propriété de certains matériaux est particulièrement avantageuse car il en résulte la possibilité de réaliser des enroulements pour générer des champs magnétiques pouvant accepter des courants électriques importants, sous réserve de ne pas dépasser certaines densités de courant critiques, sans échauffement par effet joule et avec des sections conductrices, et donc des masses des enroulements, réduites.

En contrepartie, il est nécessaire pour obtenir ce comportement de la matière de maintenir celle-ci à des températures inférieures à une température critique, dépendant du matériau conducteur mis en œuvre, températures pouvant être cryogéniques et proches du zéro absolu, au moins pour certains modes de supraconductivité.

Cette contrainte a été la cause d'un développement de machines à bobines supraconductrices limité à des applications statiques comme par exemple des bobines utilisées dans les accélérateurs de particules ou dans les appareils d'imagerie par résonance magnétique, et plus récemment pour le stockage d'énergie sous forme magnétique, pour lesquelles le refroidissement permanent nécessaire pouvait sans inconvénient insurmontable être réalisé par des installations lourdes et complexes à mettre en œuvre.

La découverte de matériaux supraconducteur dit « haute température », par exemple le diboride de magnésium MgB2 dont la supraconductivité est obtenue pour des températures de l'ordre de 30 Kelvin ou d'autres alliages qui peuvent présenter la supraconductivité pour des températures aussi élevées que 70 Kelvin, permet de diminuer les contraintes de température et de simplifier les systèmes de refroidissement des machines mettant en œuvre des bobines supraconductrices.

La demande de brevet européen publiée sous le numéro EP 1777800 décrit un exemple de machine électromécanique utilisant un bobinage supraconducteur.

Dans cet exemple, le bobinage supraconducteur, situé entre le rotor et le stator, est enfermé dans un cryostat placé à l'intérieur de la machine pour que le bobinage soit maintenu à une température inférieure à la température critique du matériau utilisé. Il n'est pas donné d'explication sur la manière dont le cryostat est maintenu à la température voulue.

De manière connue, un tel maintien à basse température est obtenu par un fluide tel que par exemple de l'azote liquide ou de l'hélium ou de l'hydrogène liquide, en fonction de la température critique du matériau supraconducteur mis en œuvre, maintenu à la température voulue par des systèmes de refroidissements.

Dans une première méthode connue, un réservoir de gaz liquéfié à basse température est utilisé comme réserve de froid et un flux est prélevé de ce réservoir pour refroidir en permanence les conducteurs électriques en matériau supraconducteur de la machine avant d'être rejeté à l'extérieur de la machine.

Dans ce cas il est nécessaire de prévoir une masse suffisante de gaz liquéfié à température cryogénique, des moyens de stockage permettant de maintenir ce gaz à sa température de liquéfaction et des moyens de régulation pour distribuer le gaz de sorte à maintenir les éléments supraconducteurs de la machine à la température voulue tout en limitant au minimum la consommation de gaz.

Lorsque la machine est embarquée dans un véhicule, outre la nécessité pénalisante d'emporter une quantité de gaz suffisante, il est nécessaire de prévoir des moyens de distribution et de régulation dont le fonctionnement à température cryogénique est plus complexe que dans le cas des systèmes fonctionnant à température ambiante.

Dans une seconde méthode connue, un fluide à basse température circule en circuit fermé entre les parties de la machine à maintenir à température cryogénique et un dispositif de génération de froid cryogénique (cryocooler en terminologie anglo-saxone).

De tels dispositifs de génération de froid cryogénique sont connus mais ils restent lourds et encombrants et exigent d'être alimentés en énergie pour produire le froid nécessaire.

Dans le cas de l'utilisation de tels dispositifs, une panne du système de refroidissement a généralement pour conséquence immédiate l'arrêt du fonctionnement de la machine refroidie sauf à prévoir des dispositifs de refroidissement redondants.

Le document DE19710501 décrit une machine électrique comportant un stator générant un champ magnétique rotatif pour entraîner un rotor monté sur un arbre de la machine. La partie extérieure du rotor est formée d'un matériau supraconducteur à haute température, refroidi à basse température via un dispositif de refroidissement.

Le document US2010/164309 décrit un appareil à moteur supraconducteur dont le moteur supraconducteur comprend une bobine supraconductrice et un moteur mobile sur la base d'un champ magnétique mobile généré par la bobine supraconductrice lorsqu'une énergie électrique lui est fournie. Ce moteur comprend de plus un conteneur définissant une chambre extérieure d'isolation thermique sous vide qui recouvre une chambre extérieure et une partie génératrice de température extrêmement basse refroidissant la bobine supraconductrice du moteur supraconducteur à une température égale ou inférieure à une température critique de la bobine supraconductrice.

Le document « Magnetische Charakterisierung von schmelzturierten YBa CU O$_7$, Hochtemperatur-Supraleitern décrit des applications du matériau supraconducteur YBa Cu

O$_7$ dont u guide linéaire mettant en œuvre le matériau supraconducteur. Dans le montage expérimental proposé, le matériau supraconducteur est immergé dans un réservoir isolé rempli avec de l'azote de sorte que le dispositif fonctionne jusqu'à évaporation de l'azote liquide.

Les méthodes connues s'avèrent donc pénalisantes et ne sont pas satisfaisantes pour des machines embarquées lorsqu'en particulier le volume, la masse et la fiabilité sont des critères essentiels comme par exemple dans le cas 20 des applications à bord des aéronefs.

L'invention apporte une solution à ces différents problèmes au moyen d'une machine électromécanique selon la revendication 1. Suivant cet agencement la machine électromécanique bénéficie, après la mise en froid, des avantages apportés par des conducteurs électriques, de bobinage en particulier, supraconducteurs sans moyens externes de maintien de la température en dessous de la température critique, bénéficiant de la masse de la partie fonctionnelle comme puits de chaleur.

Il est ainsi garanti par la considération de la mission la plus pénalisante, en regard des critères thermiques considérés, que la machine électromécanique restera opérationnelle pendant toute la durée de la mission, quelle que soit la mission réalisée par exemple par le véhicule utilisant cette machine.

Il est de la sorte exploité les différentes capacités d'accumulation thermique pour obtenir une autonomie thermique optimale de la machine mécanique avec une pénalité minimum de masse sur la machine.

Pour atteindre l'objectif avec le minimum de pénalités, en particulier de pénalités de masse, les matériaux entrant dans la constitution de la partie fonctionnelle sont avantageusement sélectionnés parmi des matériaux ayant une chaleur spécifique élevée, supérieure à 400 J/kg °C et de préférence supérieure à 800 J/kg °C, de sorte à former un puits de chaleur apte à accumuler au moins une partie substantielle de la quantité de chaleur **Emax.**

De tels matériaux sélectionnés en fonction de leurs chaleurs spécifiques sont également sélectionner en fonction de leurs autres exigences (mécaniques, électriques, usinages, recyclages, coûts ...) pour ne pas pénaliser la conception de la machine électromécanique.

Pour favoriser les échanges thermiques, en particulier pendant une phase de mise en froid, les parties réalisées en matériaux ayant une chaleur spécifique élevée sont agencées et géométriquement configurées de sorte à favoriser les échanges thermiques entre ces matériaux et le volume intérieur de l'enceinte isolante.

Il est ainsi obtenu une réserve de capacité thermique, dont le volume peut être ajusté lors de la conception de la machine, bénéficiant de la quantité d'énergie absorbée par la masse du liquide cryogénique et par le changement de phase du liquide cryogénique remplissant le réservoir, lorsque la température de changement de phase, de la phase liquide à la phase gazeuse, est inférieur à la température critique, pour maintenir la température dans l'enceinte isolante en dessous de la température critique.

Dans une forme de réalisation, le réservoir est formé par un séparateur interne déterminant, entre ce séparateur interne et un séparateur plus externe de la paroi isolante, le volume du réservoir et déterminant du côté d'une face interne un volume réduit dans lequel se trouve la partie fonctionnelle. Suivant cet agencement, la partie fonctionnelle se trouve dans un espace libre au centre du réservoir contenant le liquide cryogénique ce qui en favorise le maintien à basse température.

Pour réaliser la mise en froid par une circulation de fluide cryogénique et le remplissage du réservoir avec le fluide cryogénique, la paroi de l'enceinte isolante comporte des ouvertures de mise en communication du volume intérieur avec l'extérieur de l'enceinte isolante, ces ouvertures comportant des vannes et ou des clapets de sorte à contrôler la circulation de fluides par les dites ouvertures.

Afin d'accéder à la partie fonctionnelle depuis l'extérieur de l'enceinte dans laquelle elle est contenue, la paroi de l'enceinte isolante comporte une ou des ouvertures traversées de manière étanche au fluide par au moins un arbre de transmission de la puissance mécanique apportée à ou générée par la partie fonctionnelle de sorte à disposer d'une extrémité dudit arbre accessible de l'extérieur de l'enceinte isolante et ou comporte une ou des ouvertures traversées par des câbles conducteurs électriques, par exemple des câbles de transmission de puissance électrique ou des câbles de systèmes de contrôle et de commande.

Il est ainsi évité des pertes thermiques par une circulation de fluide entre l'intérieur et l'extérieur de l'enceinte tout en conservant l'accès aux fonctions essentielles de la partie fonctionnelle.

Dans ce cas, avantageusement, le ou les arbres de transmission mécaniques et ou les conducteurs électriques traversant la paroi de l'enceinte isolante, et d'une manière générale tous les éléments tels que des supports en contact avec le volume intérieur et avec l'extérieur et donc susceptible de créer des ponts thermiques défavorable au maintien des conditions de température souhaitée dans le volume intérieur, sont réalisés dans un matériau ayant une conduction thermique inférieure à 25 W/m °C.

Pour réaliser les opérations de mise en froid et la surveillance du maintien des conditions de fonctionnement supraconducteur des parties électriques de la partie fonctionnelle, la machine électromécanique comporte des moyens de contrôle et de surveillance de la température du volume intérieur et ou de la température des bobinages en matériau supraconducteur, ces moyens de contrôle et de surveillance comportant au moins une sonde de température fixée à la partie fonctionnelle.

L'invention concerne en particulier un aéronef comportant une telle machine électromécanique. L'aéronef bénéficie alors d'une masse réduite de la machine électromécanique sans que de nouveaux systèmes soient mis en place sur l'aéronef pour la production de froid.

Dans une forme avantageuse, l'invention concerne un véhicule comportant une telle machine électromécanique mise en œuvre comme moteur de propulsion du véhicule.

L'invention concerne également un procédé de mise en œuvre d'une telle machine électromécanique selon la revendication 11.

Suivant une forme du procédé de mise en œuvre, un volume réduit du volume intérieur de l'enceinte isolante dans lequel est comprise la partie fonctionnelle est rempli de fluide cryogénique immergeant cette partie fonctionnelle tant que la température de cette partie fonctionnelle n'est pas stabilisée à la température cryogénique et dans lequel le volume réduit est ensuite purgé du fluide cryogénique qu'il contient. La mise en froid de la partie assurant un stockage thermique en raison de sa chaleur spécifique est ainsi réalisée de manière efficace et rapide ce qui s'avère important dans le cas de missions successives devant être réalisées par un véhicule embarquant la machine électromécanique.

En outre lorsque la machine électromécanique comporte un réservoir intérieur à l'enceinte isolante, le réservoir est rempli de fluide cryogénique avant la déconnexion du système de refroidissement extérieur. La capacité de maintien en condition de température s'en trouve ainsi améliorée.

La présente invention est décrite en référence aux figures qui, de manière non limitative, représentent schématiquement :

figure 1 :  une section schématique d'une machine électromécanique suivant l'invention ;

figure 2 :  un schéma bloc du procédé de conception de la machine électromécanique de l'invention ;

figure 3 :  un schéma bloc d'une méthode de mise en froid de la machine de l'invention en vue d'une mission.

Les composant et éléments divers de la machine électromécanique ne sont pas représentés à l'échelle.

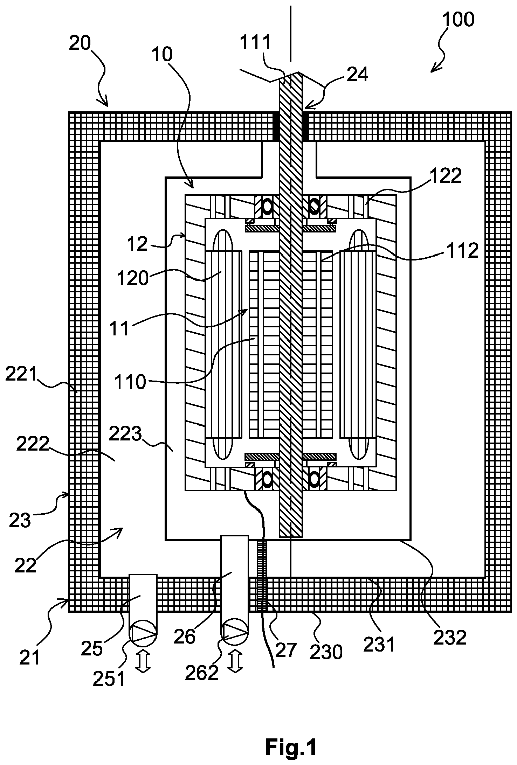

Sur la figure 1 les éléments accessoires, supports, câbles électriques, capteurs ... ne sont pas représentés.

La machine électromécanique 100, illustrée schématiquement sur la figure 1, comporte une partie fonctionnelle 10 et comporte un système de contrôle thermique 20 pour réguler une température de ladite partie fonctionnelle.

La partie fonctionnelle 10 assure les fonctions attendues de la machine électromécanique 100, typiquement les fonctions d'un moteur électrique et ou celles d'un générateur électrique comportant ici un rotor 11.

Dans ses principes généraux et sa structure la partie fonctionnelle 10 est conforme à celle des machines électromécaniques connues comportant une partie mobile, ici un rotor 11, et un stator 12. Elle comporte également, de manière connue, des parties magnétiques, par exemple des aimants et ou des parties réalisées dans des matériaux magnétiques, et comporte au moins un conducteur électrique, par exemple une bobine réalisée avec un matériau électriquement conducteur.

Dans l'exemple illustré sur la figure 1, l'homme du métier reconnaîtra une machine tournante, moteur électrique ou électrogénérateur, comportant des bobines de stator 120 et des bobines de rotor 110.

Cet exemple n'est pas limitatif, toute machine électromécanique comportant des bobinages en vue de la création de champs magnétiques pouvant être mises en œuvre dans le cadre de la présente invention.

Les matériaux électriquement conducteurs sont, dans le cas de la machine électromécanique 100, des matériaux supraconducteurs dont la résistance électrique devient nulle à une température inférieure à une température critique **Tc** caractéristique du matériau utilisé.

Le matériau supraconducteur est par exemple un matériau supraconducteur haute température dont la température critique est supérieure ou égale à la température cryogénique de vaporisation d'un gaz (à température ordinaire) tel que de l'azote diatomique liquide, 77 Kelvin à la pression ambiante ordinaire, tel que de l'hydrogène diatomique liquide, 20 Kelvin à la pression ambiante ordinaire, ou encore tel que de l'hélium liquide, environ 4 Kelvin à la pression ambiante ordinaire.

En outre des parties non électriques de la partie fonctionnelle 10, par exemple une masse magnétique du rotor 11 ou une cage du stator 12, sont réalisées de sorte à créer un puits d'accumulation thermique d'une capacité voulue dont les fonctions seront décrites ultérieurement.

Suivant cette condition, les matériaux mis en œuvre pour réaliser les dites parties non électriques sont choisis, dans les limites exigées pour leurs propriétés mécaniques, avec des chaleurs spécifiques Cp aussi élevées que possible.

Par exemple les parties non électriques sont réalisées en incorporant des matériaux ferreux (Cp du fer = 460 J/Kg °C), de l'aluminium (Cp de l'aluminium = 890 J/Kg °C), voire de bore (Cp = 1300 J/Kg °C) ou de béryllium Cp = 1800 J/Kg °C).

D'une part ces matériaux, ou d'autres matériaux présentant des chaleurs spécifiques élevées, seront préférés à des matériaux polymères, dont l'utilisation est fréquente dans les moteurs et les générateurs électriques, et d'autre part il sera recherché d'incorporer une masse suffisante de ces matériaux pour obtenir la capacité d'accumulation thermique voulue.

Un tel résultat, qui sera a priori plus simple à obtenir dans le cas de machines électromécaniques de puissance, et donc de masses importantes, peut également être atteint ou approché en incorporant dans le volume intérieur 22 de l'enceinte isolante 21 des accessoires tels que des réducteurs ou des convertisseurs de mouvements mécaniques qui, en raison des puissances à transmettre par ces réducteurs ou convertisseurs, représentent généralement une masse de matériaux, susceptibles de réaliser une accumulation d'énergie sous forme thermique, non négligeable par rapport à la masse de la machine électromécanique 100.

Il résulte de ces contraintes que les critères d'architecture et les critères de dimensionnement pris en compte par l'homme du métier de la conception des machines électromécaniques sont dans le cas présent différents de ceux considérés dans les règles ordinaires de conception.

Le système de contrôle thermique 20 comporte principalement une enceinte isolante 21 d'isolement thermique de la partie fonctionnelle 10, un dispositif de refroidissement d'un volume intérieur 22 de l'enceinte isolante 21 et un système de contrôle et de surveillance de la température dans ladite enceinte isolante.

L'enceinte isolante 21 est principalement formée par une paroi 23 enveloppant le volume intérieur 22.

Cette paroi 23 est réalisée pour limiter le flux thermique entre le volume intérieur 22 de l'enceinte isolante, à basse température, par exemple à une température inférieure à 100 Kelvin, et un espace extérieur à l'enceinte isolante qui peut être à des températures de l'ordre de 400 Kelvin, voire plus dans certains environnements.

Ce type d'enceinte isolante est connu en particulier dans le domaine des cryostats ou vases de Dewar e.

De manière connue, la paroi 23 comporte le plus souvent plusieurs séparateurs 230, 231, 232 distants les uns des autres et délimitant des espaces entre eux. Les espaces entre les séparateurs déterminent des volumes de séparation 221, 222.

Le volume de séparation 221 le plus extérieur, dans lesquels un vide partiel de gaz est réalisé et ou contenant un isolant thermique, par exemple un aérogel de silice, assure une première isolation.

Des ouvertures 24, 25, 26, 27, de la paroi nécessairement présentes dans la paroi sont étanches de sorte à limiter, autant que possible, les échanges de fluide entre l'intérieur de l'enceinte isolante 21 et l'extérieur.

De telles ouvertures sont agencées pour assurer des accès à des parties internes à ladite enceinte isolante depuis l'extérieur de ladite enceinte isolante.

Dans le cas de l'exemple de réalisation illustré sur la figure 1, au moins un arbre 111 de transmission de puissance mécanique, par exemple solidaire de parties tournantes de la machine électromécanique 100, traverse la paroi isolante ainsi qu'un faisceau de câbles électriques.

Dans une forme de réalisation, non représentée, la machine électromécanique ne comporte pas d'arbre traversant la paroi et un arbre de transmission mécanique totalement extérieur à l'enceinte isolante est entraîné en mouvement par un couplage magnétique avec des parties mobiles internes de la partie fonctionnelle à l'intérieur de l'enceinte isolante.

De préférence tous les éléments traversant la paroi 23 de l'enceinte isolante et les séparateurs 230, 231, 232 sont en matériaux choisis pour leurs propriétés de mauvais conducteurs thermiques.

La notion de matériaux mauvais conducteurs thermiques est ici à prendre de manière relative dans la mesure où des critères fonctionnels, par exemple la résistance mécanique pour un arbre 111 de la machine électromécanique ou la conduction électrique pour un câble d'alimentation ou d'un capteur de mesure, doivent nécessairement être pris en considération.

A titre d'exemple un arbre mécanique est réalisé en un alliage de titane dont la conductivité thermique proche de 20 W/m °C est inférieure à celle d'un acier ordinaire, ayant une conductivité thermique au moins deux fois supérieure, tout en ayant une bonne résistance mécanique, ou encore un câble électrique, au moins dans sa partie traversante de la paroi de l'enceinte isolante, est réalisé dans un alliage fer-nickel à 36% de Nickel (tel que l'Invar®) également mauvais conducteur thermique, pour un métal, avec une conductivité thermique de 13 W/m °C, et dont la résistivité électrique, bien qu'environ cinquante fois celle du cuivre, ne s'avère pas pénalisante sur une courte longueur de câble.

D'autres matériaux peuvent être utilisés pour autant qu'ils présentent des caractéristiques similaires ou mieux adaptées en terme de mauvaise conduction thermique tels que des matériaux composites à matrice polymère.

Le système de contrôle thermique 20 comporte également un échangeur thermique incorporé à l'enceinte isolante.

La notion d'échangeur thermique est ici à considérer dans un sens large. L'échangeur thermique incorpore ici un ensemble d'éléments et de caractéristiques de réalisation répartis sur la machine électromécanique 100 et qui favorisent le transfert de chaleur entre les différents éléments au sein de la ladite machine électromécanique.

L'échangeur thermique comporte en particulier des ouvertures 25, 26 agencées dans la paroi 23 de l'enceinte isolante de sorte à permettre la circulation d'un fluide entre l'intérieur de ladite enceinte isolante et l'extérieur, tant dans le sens d'un remplissage de volumes intérieurs de ladite enceinte isolante que dans le sens du drainage des dits volumes. Les dites ouvertures sont pourvues de dispositifs d'obturation 251, 261 commandés, de type vanne, et ou automatiques, de type clapet.

Les passages 25, 26 et les dispositifs d'obturation sont agencés pour limiter les échanges thermiques entre l'intérieur de l'enceinte isolante et l'extérieur comme cela a déjà été dit, en particulier par l'utilisation de matériaux à faible conduction thermique pour leurs réalisations.

Dans une forme de réalisation, l'échangeur thermique met en œuvre des particularités géométriques des parties non électriques, en matériaux choisis pour leurs propriétés d'accumulation thermique, de la partie fonctionnelle 10 qui favorisent les échanges thermiques à l'intérieur de l'enceinte isolante 21.

De telles particularités géométriques consistent par exemple en des alésages 112, 122 traversant des parties non électriques de sorte qu'une surface de contact des dites parties non électriques avec le fluide environnant est augmentée pour favoriser les échanges thermiques.

Dans une forme de réalisation un séparateur interne 232 enferme de manière étanche la partie fonctionnelle 10 à l'intérieur d'un volume réduit 223 de l'enceinte isolante 21.

La paroi du séparateur interne 232 déterminent, avec un séparateur 231, plus externe, de la paroi 23 de l'enceinte isolante, un réservoir 222 enveloppant le volume réduit 223 dans lequel se trouve la partie fonctionnelle 10. Dans ce cas le séparateur interne 232 ne présente pas de caractéristique d'isolation thermique particulière, une transparence thermique étant autant que possible recherchée. Le séparateur interne 232 est par exemple en alliage d'aluminium.

Dans ce cas, mettant en œuvre un réservoir 222, au moins une ouverture 25 de remplissage et ou de drainage débouche dans ledit réservoir et ladite au moins une ouverture, ou au moins une autre ouverture débouchant dans ledit réservoir, est pourvue d'un dispositif de régulation, non représenté, de la pression dans le réservoir 222 de sorte évacuer un fluide qui s'y trouverait avec une pression supérieure à une pression de tarage.

Dans ce cas, suivant un mode de réalisation illustré sur la figure 1, au moins une ouverture 26 de remplissage et ou de drainage traverse de manière étanche le volume du réservoir 222 et les séparateurs 230, 231, 232 de la paroi isolante 23 de sorte à déboucher dans le volume réduit 223.

Le système de contrôle thermique 20 comporte également les vannes ou clapets, les sondes de mesures et les câbles électriques, non représentés, nécessaires ou utiles au fonctionnement et à la surveillance dudit système de contrôle thermique et de la température de la partie fonctionnelle 10 de machine électromécanique 100. Comme déjà précisé, toutes les traversées des parois sont étanches et au besoin thermiquement isolées.

Dans une forme de réalisation non illustrée l'ouverture débouchant dans le réservoir 222, et pourvue d'un dispositif de régulation de la pression, débouche également dans le volume réduit 223. Le fluide cryogénique libéré par le réservoir 222 est ainsi injecté dans le volume réduit 223 enfermant la partie fonctionnelle 10 qui est refroidie avant que ledit fluide soit lui même évacué par une ouverture 26 de la paroi isolante 23 débouchant dans ledit volume réduit.

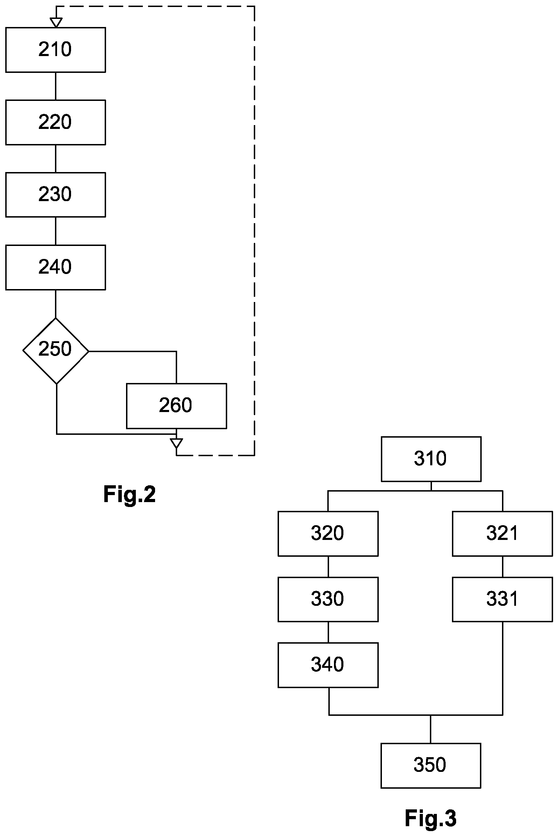

La machine électromécanique 100 et sa structure, en particulier la manière dont ses éléments de structure doivent être conçus et réalisés, seront mieux compris à la description des principes mis en œuvre lors d'un exemple de la conception, figure 2, d'une telle machine électromécanique et à la description de la mise en œuvre opérationnelle, figure 3, d'une telle machine électromécanique, qui seront décrits dans le contexte d'une machine électromécanique de type générateur électromécanique embarqué à bord d'un aéronef.

Outre les performances conventionnellement attendues d'une machine électromécanique destinée à un usage précis, l'homme du métier en charge de concevoir une machine électromécanique mettant en œuvre les principes de l'invention établira dans une première phase 210, en fonction des différentes missions possibles pour l'avion, la durée maximale de fonctionnement continu du générateur électromécanique.

Cette durée maximale de fonctionnement continu est en pratique la durée maximum possible d'une mission de l'aéronef, réserves comprises, qui est connu, par exemple 6 heures de mission, et en prenant en compte un coefficient de sécurité, par exemple 20%, soit 7,2 heures de fonctionnement continu.

En fonctions des technologies qui lui sont disponibles dans le domaine des matériaux supraconducteurs, l'homme du métier va alors dans une seconde phase 220 déterminer la température maximale **Tmax** que le générateur électrique ne doit pas dépasser pendant la durée maximale de la mission avec marge, 7,2 heures dans l'exemple, pour rester fonctionnel pendant toute la mission.

Cette température est par exemple de 75 Kelvin, pour un matériau supraconducteur haute température ayant une température critique **Tc** au moins légèrement supérieure à cette valeur.

Dans une troisième phase 230 il est déterminé la quantité d'énergie sous forme thermique qui sera apportée à la machine électromécanique pendant la durée précédemment établie.

Ce bilan thermique prend en compte un flux de chaleur provenant de l'extérieur et qui vient réchauffer la partie fonctionnelle 10, flux de chaleur qui est fonction des performances de l'isolation thermique apportée par l'enceinte isolante 21, d'une température extérieure et de la température maintenue effectivement dans ladite enceinte isolante.

Ce bilan thermique prend également en compte la chaleur générée par la partie fonctionnelle 10 à l'intérieure de l'enceinte isolante 21. En effet bien que les éléments électriquement conducteurs soient supraconducteurs dans les conditions de température maintenues dans ladite enceinte isolante, le fonctionnement de la machine électromécanique 100 dissipe une énergie interne, sous forme de pertes dans les parties magnétiques, d'hystérésis, qui se traduit par un apport de chaleur, lequel sera déterminé pour un profil de mission le plus sévère suivant le critère dudit apport de chaleur.

Il est alors déduit du bilan thermique que la machine électromécanique recevra au maximum une énergie **Emax** (Joule) dans le cas de la mission la plus défavorable.

Dans une quatrième phase 240, compte tenu d'une température initiale **Tmin,** par exemple la température de l'azote liquide à pression atmosphérique ambiante au sol, à l'intérieur de l'enceinte isolante 21, et de la température maximale **Tmax** admissible, il est déterminé une capacité calorifique statique **CCs** (Joule/°C) totale des éléments à l'intérieur de l'enceinte isolante, c'est à dire hors changement de phase de matière.

On remarquera que la capacité calorifique statique **CCs** totale est celle apportée principalement ici par des structures de la partie fonctionnelle 10.

Éventuellement en adaptant la capacité calorifique statique **CCs** par des ajustements dans les dimensions des éléments de la partie fonctionnelle 10, la machine électromécanique 100 sera en mesure de réaliser la mission sans que sa température interne ne dépasse la température maximale **Tmax,** si :

$$CCs \times (Tmax-Tmin) >= Emax$$

Il est alors vérifié à l'étape 250 que cette condition est réalisée ou non.

Si cette condition est réalisée, la machine électromécanique 100 ne comportera a priori que le seul mode de maintien au froid par une accumulation statique de froid, et les caractéristiques essentielles de la machine électromécanique sont, pour les fonctions de contrôle thermique, à cette phase définies.

Si cette condition n'est pas vérifiée, il sera déterminé dans une cinquième phase 260 quelle quantité d'un liquide cryogénique doit être emporté de sorte à compenser l'écart entre **Emax** et le terme **CCs x (Tmax-Tmin)** d'une part par une élévation de la température dudit liquide cryogénique jusqu'à un point d'ébullition et d'autre part par le changement de la phase liquide à la phase vapeur dudit liquide cryogénique. Le liquide cryogénique est dans ce cas nécessairement choisi avec un point d'ébullition inférieur à la température critique **Tc.**

Dans le cas de l'azote liquide, à la pression atmosphérique de 101325 pa, la chaleur latente de vaporisation est d'environ 200 kJ/kg.

La quantité de liquide cryogénique nécessaire déterminera dans ce cas le volume du réservoir 222.

Il est évident que le cycle de conception qui vient d'être présenté de manière simplifiée sera réalisé par l'homme du métier par une succession d'itérations du fait que le processus de dimensionnement thermique n'est pas analytique et nécessite que des résultats intermédiaires soient repris avec les hypothèses initiales pour converger vers un résultat final.

Malgré la complexité introduite par le besoin de maintenir à basse température la partie fonctionnelle 10, la machine électromécanique 100 s'avère plus légère et de dimensions plus réduites qu'une machine électromécanique conventionnelle de mêmes performances électriques et ou mécaniques, en particulier du fait de l'utilisation de bobinages en matériaux supraconducteurs qui autorise le passage de courants dans les fils des bobinages sans échauffement.

En outre le système de contrôle thermique 20 qui maintient à la température cryogénique des éléments conducteurs est totalement statique.

En s'appliquant à la partie fonctionnelle 10 prise dans son ensemble, le système de contrôle thermique 20 est beaucoup plus simple, plus léger et plus fiable que dans les systèmes à fonctionnement cryogénique connus s'attachant à refroidir les parties de conducteurs électriques.

Ce résultat est obtenu au prix d'une mise en œuvre spécifique de la machine électromécanique 100.

Lorsque que la machine électromécanique 100 doit être utilisée elle est préalablement mise en froid pour réaliser la mission, par exemple de l'aéronef sur lequel elle est installée.

Dans une première étape 310, une source de liquide cryogénique, par exemple d'azote liquide à la température de 77 Kelvin ou moins, d'un système de refroidissement extérieur est raccordée à une ouverture 25, 26 de remplissage de l'enceinte isolante, et le cas échéant une installation de récupération de liquide cryogénique est raccordée à une ouverture de drainage. Dans le cas où l'enceinte isolante 21 comporte un volume réduit 223, les ouvertures 26 débouchant dans ledit volume réduit sont raccordées 320 en premier.

Dans une seconde étape 330, du liquide cryogénique est envoyé par l'ouverture de remplissage dans le volume réduit 223, ou dans le volume intérieur de l'enceinte isolante 21 si celle-ci ne comporte pas de volume réduit, de sorte à remplir ledit volume réduit, ou ledit volume intérieur, et à immerger la partie fonctionnelle 10 qui s'y trouve. Lors de cette seconde étape, la quantité de liquide cryogénique est au besoin ajustée en permanence de sorte à compenser une évaporation dudit liquide cryogénique.

On notera que dans cette seconde étape, les formes géométriques choisies pour les éléments de la partie fonctionnelle 10 utilisés comme puits de chaleur assurent une surface de contact augmentée entre les dits éléments et le liquide cryogénique ce qui a pour effets d'accélérer la mise en température de ladite partie fonctionnelle.

Lorsque la température de la partie fonctionnelle 10 est descendue et stabilisée à la température du liquide cryogénique, ce qui est par exemple contrôlé par des sondes de température installées à demeure dans l'enceinte intermédiaire, sondes qui sont raccordées pendant cette étape au système de refroidissement, le liquide cryogénique est drainé 340 en dehors de l'enceinte intermédiaire qui est le cas échéant asséchée sans toutefois que sa température ne soit élevée par cette opération.

Dans une troisième étape 321, lorsque le volume intérieur 22 de l'enceinte isolante 21 comporte un volume réduit 223, qui peut être réalisée simultanément avec l'étape 320, la source de liquide cryogénique, par exemple d'azote liquide à la température de 77 Kelvin ou moins, le système de refroidissement extérieur est raccordée à une ouverture de remplissage de l'enceinte isolante, et le cas échéant une installation de récupération de liquide cryogénique est raccordée à une ouverture de drainage, pour les ouvertures 25 débouchant dans le réservoir 222.

Dans une quatrième étape 331 le réservoir 222 est rempli de liquide cryogénique.

De préférence le système de refroidissement extérieur est maintenu connecté de sorte à maintenir le liquide cryogénique à un niveau souhaité aussi longtemps que possible pour n'être déconnecté que juste avant le début de la mission.

Il convient de noter que la présence du réservoir 222 enveloppant le volume réduit 223, dans lequel se trouve la partie fonctionnelle 10 préalablement ou simultanément refroidie, assure que ledit volume réduit et la partie fonctionnelle 10 sont maintenus à la température du liquide cryogénique jusqu'au début de la mission.

Lorsque le dispositif de refroidissement extérieur est déconnecté 350, la machine électromécanique 100 devient autonome en matière de contrôle de sa température et apte à conserver la température interne dans l'enceinte isolante 21 inférieure à la température critique $T_c$ pour une durée maximale correspondant à la capacité de stockage de froid définie lors de la conception de ladite machine électromécanique.

Au fur et à mesure de la mission, la chaleur produite par la partie fonctionnelle 10, minimisée par l'usage de supraconducteurs, et celle issue du flux de chaleur lié à la différence des températures entre l'intérieur et l'extérieur de l'enceinte isolante 21 provoquent, dans un premier temps l'augmentation de la température à l'intérieur de l'enceinte jusqu'à la température d'ébullition du liquide cryogénique, puis dans un second temps la température est maintenue constante à ladite température d'ébullition pendant une phase d'évaporation du liquide cryogénique, enfin dans un troisième temps la température augmente progressivement depuis la température d'ébullition jusqu'à la température ambiante. La température maximale prévue en fonctionnement ne devant pas être atteinte pendant la mission. Les vapeurs provoquées par l'ébullition du liquide cryogénique sont évacuées par le dispositif de régulation de la pression.

Lorsque la mission est terminée, la machine électromécanique 100 est à nouveau refroidie et ou la quantité de liquide cryogénique complétée en vue d'une nouvelle mission.

Avantageusement, lorsqu'un véhicule, par exemple un aéronef, comporte une pluralité de machines électriques de l'invention, ledit véhicule comporte un réseau de distribution du fluide cryogénique sur lequel est raccordé le dispositif de refroidissement extérieur, et une surveillance centralisée des températures des différentes machines électriques relié à ce réseau est également réalisée.

On comprend des exemples donnés de réalisation, de conception et d'utilisation d'une machine électromécanique suivant l'invention que celle-ci est susceptible de variantes tout en restant dans les principes généraux de l'invention.

En particulier la structure de l'enceinte isolante, la forme et l'agencement d'un réservoir cryogénique incorporé dans l'enceinte isolante, les moyens de mise en froid et remplissage en liquide cryogénique, et les équipements de contrôle et de surveillance peuvent prendre des formes variées pour réaliser les mêmes fonctions que celles décrites.

De même le nombre de bobinage cryogénique de la partie fonctionnelle, voire le nombre de parties mécaniques indépendantes de la partie fonctionnelle d'une même enceinte isolante peuvent être quelconques.

L'homme du métier est également en mesure de sélectionner des matériaux et des paramètres tels que le type et la température du fluide cryogénique en fonction des exigences propres au cas d'espèce. Ainsi le fluide cryogénique peut être de l'azote ou de l'hydrogène ou de l'hélium suivant les exigences liées à la température critique du matériau supraconducteur mis en œuvre.

Il est ainsi réalisé une machine électromécanique 100 qui bénéficie des avantages des matériaux supraconducteurs mais sans être pénalisée par des installations complexes de refroidissement grâce à une enceinte de confinement de froid contenant l'ensemble de la partie fonctionnelle 10 de ladite machine électromécanique utilisée comme puits de chaleur et au report des moyens complexes de production de froid vers des installations non embarquées.

Une telle machine est par exemple un générateur électrique dont l'arbre 111 d'entraînement des parties mobiles est relié à une source de puissance mécanique extérieur d'un moteur de propulsion ou d'un générateur de gaz d'un groupe auxiliaire de puissance.

Une telle machine est par exemple un moteur électrique d'un actionneur ou un moteur électrique de propulsion d'un véhicule.

**Revendications**

1. - Machine électromécanique (100), comportant au moins une partie constituée d'un bobinage en un matériau devenant supraconducteur électrique lorsque sa température est inférieure à une température critique Tc, une partie fonctionnelle (10) de ladite machine électromécanique étant contenue dans un volume intérieur (22) délimité par une paroi (23) d'une enceinte isolante (21) sur le plan thermique et étanche aux fluides,

**caractérisée en ce que**

le volume intérieur (22) comporte un réservoir (222) destiné à stocker du fluide cryogénique, à l'état liquide lorsque la température est inférieure à la température critique Tc, de manière non isolée vis-à-vis du volume intérieur (22) sur le plan de la conduction thermique, le réservoir étant formé par un séparateur interne (232) déterminant, entre ledit séparateur interne et un séparateur plus externe de la paroi (23), un volume du réservoir (222) et déterminant du côté d'une face interne un volume réduit (223) dans lequel se trouve la partie fonctionnelle (10) et **en ce que** le volume intérieur (22) comporte :

- pour un intervalle de température entre une température initiale **Tmin,** égale à la température d'un fluide cryogénique et une température maximale **Tmax** de fonctionnement, au plus égale à la température critique Tc,
- une capacité de stockage d'énergie thermique sous forme statique et
- une capacité de stockage d'énergie par une chaleur latente de vaporisation d'une quantité de fluide cryogénique remplissant le réservoir (222),

la capacité de stockage d'énergie thermique sous forme statique plus ladite capacité de stockage d'énergie par chaleur latente de vaporisation du fluide cryogénique représentant au moins la quantité de chaleur **Emax** introduite dans ledit volume intérieur (22), lorsque la machine électromécanique (100) est utilisée pendant une durée et des conditions de fonctionnement correspondant à celles d'une mission non interrompue la plus pénalisante vis-à-vis de ladite quantité de chaleur parmi un ensemble de missions dans lesquelles ladite machine électromécanique (100) est susceptible d'être utilisée.

2. - Machine électromécanique suivant la revendication 1 dans laquelle des matériaux entrant dans la constitution de la partie fonctionnelle (10) sont sélectionnés parmi des matériaux ayant une chaleur spécifique élevée, supérieure à 400 J/kg °C et de préférence supérieure à 800 J/kg °C, de sorte à former un puits de chaleur apte à accumuler au moins une partie substantielle de la quantité de chaleur **Emax.**

3. - Machine électromécanique suivant la revendication 2 dans laquelle les matériaux ayant une chaleur spécifique élevée sont agencés et géométriquement configurés de sorte à favoriser les échanges thermiques entre les dits matériaux et le volume intérieur.

4. - Machine électromécanique suivant la revendication 1 dans laquelle le réservoir est formé par un séparateur interne (232) déterminant entre ledit séparateur interne et un séparateur plus externe de la paroi (23) un volume du réservoir (222) et déterminant du côté d'une face interne un volume réduit (223) dans lequel se trouve la partie fonctionnelle (10).

5. - Machine électromécanique suivant l'une des revendications précédentes dans laquelle la paroi (23) de l'enceinte isolante (21) comporte des ouvertures (25, 26) de mise en communication du volume intérieur (22) avec l'extérieur de ladite enceinte isolante, lesdites ouvertures comportant des vannes et ou des clapets de sorte à contrôler la circulation de fluides par les dites ouvertures.

6. - Machine électromécanique suivant l'une des revendications précédentes dans laquelle la paroi (23) de l'enceinte isolante (21) comporte des ouvertures (24, 27) traversées de manière étanche au fluide par au moins un arbre (111) de transmission de puissance mécanique entre la partie fonctionnelle (10) située dans ledit volume intérieur (22) et un espace extérieur de ladite enceinte isolante et ou par des câbles conducteurs électriques.

7. - Machine électromécanique suivant la revendication 6 dans laquelle le ou les arbres (111) de transmission mécanique et ou les câbles conducteurs électriques traversant la paroi (23) de l'enceinte isolante sont réalisés dans un matériau ayant une conduction thermique inférieure à 25 W/m °C.

8. - Machine électromécanique suivant l'une des revendications précédentes comportant des moyens de contrôle et de surveillance de la température du volume intérieur (23) et ou de la température des bobinages en matériau supraconducteur, les dits moyens de contrôle et de surveillance comportant au moins une sonde de température fixée à la partie fonctionnelle (10).

9. - Aéronef comportant une machine électromécanique (100) conforme à l'une des revendications précédentes.

10. - Véhicule comportant une machine électromécanique (100) conforme à l'une des revendications précédentes, la dite machine électrique étant mise en œuvre comme moteur de propulsion dudit véhicule.

11. - Procédé de mise en œuvre d'une machine électromécanique (100) conforme à l'une des revendications 1 à 6 comportant une étape préalable de mise en froid et comportant les étapes de :

- raccordement, lorsque la machine est dans une position statique, d'un système de refroidissement extérieur apte à délivrer un liquide à température cryogénique inférieure à la température critique **Tc** à une ou plusieurs ouvertures traversant la paroi (23) de l'enceinte isolante (21) ;
- remplissage d'au moins un volume (223) à l'intérieur de l'enceinte isolante (21) contenant la partie fonctionnelle (10) de la machine électromécanique (100), avec le liquide à température cryogénique de sorte à immerger ladite partie fonctionnelle ;
- lorsque la température de la partie fonctionnelle (10) est stabilisée à la température cryogénique, drainage du liquide cryogénique dudit au moins un volume à l'intérieur de l'enceinte isolante (21) contenant la partie fonctionnelle (10) puis déconnexion du système de refroidissement extérieur

de sorte que la machine puisse être opérée de manière autonome en matière de contrôle de sa température de fonctionnement supraconducteur pour une durée maximale correspondant à la durée de la mission donnée définie lors de la conception de ladite machine électromécanique.

**12.** - Procédé suivant la revendication 11 dans lequel un volume réduit (223) du volume intérieur (22) de l'enceinte isolante (21) dans lequel est comprise la partie fonctionnelle (10) est rempli de fluide cryogénique immergeant ladite partie fonctionnelle tant que la température de ladite partie fonctionnelle n'est pas stabilisée à la température cryogénique et dans lequel ledit volume réduit est ensuite purgé du fluide cryogénique qu'il contient.

**13.** - Procédé suivant la revendication 11 ou la revendication 12 dans lequel la machine électromécanique (100) comporte un réservoir (222) intérieur à l'enceinte isolante (21), lequel réservoir est rempli de fluide cryogénique avant la déconnexion du système de refroidissement extérieur.

**Patentansprüche**

**1.** Elektromechanische Maschine (100), die mindestens einen Teil aufweist, der aus einer Wicklung aus einem Material besteht, das elektrisch supraleitend wird, wenn seine Temperatur niedriger ist als eine kritische Temperatur Tc, wobei ein Funktionsteil (10) der elektromechanischen Maschine in einem Innenvolumen (22) enthalten ist, das von einer Wand (23) eines wärmeisolierenden und fluiddichten Gehäuses (21) begrenzt wird,

**dadurch gekennzeichnet, dass**
das Innenvolumen (22) einen Behälter (222) aufweist, der dazu bestimmt ist, Kryofluid zu speichern, in flüssigem Zustand, wenn die Temperatur niedriger ist als die kritische Temperatur Tc, nicht isoliert gegenüber dem Innenvolumen (22) bezüglich der Wärmeleitung, wobei der Behälter von einem inneren Separator (232) gebildet wird, der zwischen dem inneren Separator und einem weiter außen liegenden Separator der Wand (23) ein Volumen des Behälters (222) bestimmt, und auf der Seite einer Innenseite ein reduziertes Volumen (223) bestimmt, in dem sich der Funktionsteil (10) befindet,
und dass das Innenvolumen (22) aufweist:

- für einen Temperaturbereich zwischen einer Ausgangstemperatur Tmin gleich der Temperatur eines Kryofluids und einer maximalen Betriebstemperatur Tmax höchstens gleich der kritischen Temperatur Tc
- eine Wärmeenergiespeicherkapazität in statischer Form und
- eine Energiespeicherkapazität durch eine latente Verdampfungswärme einer Kryofluidsmenge, die den Behälter (222) füllt,

wobei die Wärmeenergiespeicherkapazität in statischer Form plus die Energiespeicherkapazität durch latente Verdampfungswärme des Kryofluids mindestens die Wärmemenge Emax darstellt, die in das Innenvolumen (22) eingeführt wird, wenn die elektromechanische Maschine (100) während einer Dauer und unter Betriebsbedingungen verwendet wird, die denjenigen eines ununterbrochenen Einsatzes entsprechen, der gegenüber der Wärmemenge unter einer Einheit von Einsätzen am nachteiligsten ist, bei denen die elektromechanische Maschine (100) verwendet werden kann.

**2.** Elektromechanische Maschine nach Anspruch 1, wobei Werkstoffe, die Bestandteil des Funktionsteils (10) sind, aus Werkstoffen ausgewählt werden, die eine hohe spezifische Wärme von mehr als 400 J/kg °C und vorzugsweise höher als 800 J/kg °C haben, um eine Wärmesenke zu bilden, die mindestens einen substantiellen Teil der Wärmemenge Emax akkumulieren kann.

**3.** Elektromechanische Maschine nach Anspruch 2, wobei die Werkstoffe mit einer hohen spezifischen Wärme eingerichtet und geometrisch konfiguriert sind, um die Wärmeaustauschvorgänge zwischen den Werkstoffen und dem Innenvolumen zu begünstigen.

4. Elektromechanische Maschine nach Anspruch 1, wobei der Behälter von einem inneren Separator (232) gebildet wird, der zwischen dem inneren Separator und einem weiter außen liegenden Separator der Wand (23) ein Volumen des Behälters (222) bestimmt, und auf der Seite einer Innenseite ein reduziertes Volumen (223) bestimmt, in dem sich der Funktionsteil (10) befindet.

5. Elektromechanische Maschine nach einem der vorhergehenden Ansprüche, wobei die Wand (23) des Isoliergehäuses (21) Öffnungen (25, 26) zur Verbindung des Innenvolumens (22) mit der Außenumgebung des Isoliergehäuses aufweist, wobei die Öffnungen Ventile und oder Klappen aufweisen, um die Zirkulation von Fluiden durch die Öffnungen zu steuern.

6. Elektromechanische Maschine nach einem der vorhergehenden Ansprüche, wobei die Wand (23) des Isoliergehäuses (21) Öffnungen (24, 27) aufweist, die fluiddicht von mindestens einer mechanischen Leistungsübertragungswelle (111) zwischen dem im Innenvolumen (22) befindlichen Funktionsteil (10) und einem Raum außerhalb des Isoliergehäuses und oder von elektrischen Leiterkabeln durchquert werden.

7. Elektromechanische Maschine nach Anspruch 6, wobei die mechanische Übertragungswelle oder -wellen (111) und oder die die Wand (23) des Isoliergehäuses durchquerenden elektrischen Leiterkabel aus einem Werkstoff bestehen, der eine Wärmeleitung von weniger als 25 W/m °C hat.

8. Elektromechanische Maschine nach einem der vorhergehenden Ansprüche, die Steuer- und Überwachungseinrichtungen der Temperatur des Innenvolumens (23) und oder der Temperatur der Wicklungen aus supraleitendem Werkstoff aufweist, wobei die Steuer- und Überwachungseinrichtungen mindestens einen am Funktionsteil (10) befestigten Temperaturfühler aufweisen.

9. Luftfahrzeug, das eine elektromechanische Maschine (100) nach einem der vorhergehenden Ansprüche aufweist.

10. Fahrzeug, das eine elektromechanische Maschine (100) nach einem der vorhergehenden Ansprüche aufweist, wobei die elektrische Maschine als Antriebsmotor des Fahrzeugs verwendet wird.

11. Verfahren zur Anwendung einer elektromechanischen Maschine (100) nach einem der Ansprüche 1 bis 6, das einen vorhergehenden Schritt des Abkühlens aufweist und die folgenden Schritte aufweist:

- Anschluss, wenn die Maschine in einer statischen Position ist, eines äußeren Kühlsystems, das eine Flüssigkeit auf Kryotemperatur niedriger als die kritische Temperatur Tc an eine oder mehrere Öffnungen liefern kann, die die Wand (23) des Isoliergehäuses (21) durchqueren;
- Füllen mindestens eines Volumens (223) innerhalb des Isoliergehäuses (21), das den Funktionsteil (10) der elektromechanischen Maschine (100) enthält, mit der Flüssigkeit auf Kryotemperatur, um den Funktionsteil einzutauchen;
- wenn die Temperatur des Funktionsteils (10) auf der Kryotemperatur stabilisiert ist, Abzug der Kryoflüssigkeit aus dem mindestens einen Volumen innerhalb des Isoliergehäuses (21), das den Funktionsteil (10) enthält, dann Trennen des äußeren Kühlsystems,

damit die Maschine bezüglich der Steuerung ihrer supraleitenden Betriebstemperatur für eine maximale Dauer autonom betrieben werden kann, die der Dauer des gegebenen Einsatzes entspricht, der bei der Planung der elektromechanischen Maschine definiert wird.

12. Verfahren nach Anspruch 11, wobei ein reduziertes Volumen (223) des Innenvolumens (22) des Isoliergehäuses (21), in dem der Funktionsteil (10) enthalten ist, mit Kryofluid gefüllt wird, das den Funktionsteil eintaucht, so lange die Temperatur des Funktionsteils nicht auf der Kryotemperatur stabilisiert ist, und wobei das reduzierte Volumen anschließend von dem Kryofluid gesäubert wird, das es enthält.

13. Verfahren nach Anspruch 11 oder Anspruch 12, wobei die elektromechanische Maschine (100) einen Behälter (222) innerhalb des Isoliergehäuses (21) aufweist, wobei der Behälter vor der Trennung des äußeren Kühlsystems mit Kryofluid gefüllt wird.

**Claims**

1. Electromechanical machine (100), comprising at least one part consisting of a winding made of a material that becomes electrically superconductive when its temperature is lower than a critical temperature **Tc,** a functional part (10) of said electromechanical machine being contained in an internal volume (22) delimited by a wall (23) of a thermally insulating and fluid-tight enclosure (21),

**characterized in that**
the internal volume (22) comprises a tank (222) intended to store cryogenic fluid, in the liquid state when the temperature is lower than the critical temperature Tc, not insulated with respect to the internal volume (22) in terms of thermal conduction, the tank being formed by an internal separator (232) determining, between said internal separator and a more outer separator of the wall (23), a volume of the tank (222), and determining, on the side of an inner face, a smaller volume (223) in which the functional part (10) is located and **in that** the internal volume (22) comprises:

- for a temperature range between an initial temperature **Tmin,** equal to the temperature of a cryogenic fluid and a maximum operating temperature **Tmax,** at most equal to the critical temperature **Tc,**
- a capacity for storing thermal energy in static form and
- a capacity for storing energy by latent heat from vaporization of a quantity of cryogenic fluid filling the tank (222),

the capacity for storing thermal energy in static form plus said capacity for storing energy by latent heat from vaporization of the cryogenic fluid representing at least the quantity of heat **Emax** introduced into said internal volume (22), when the electromechanical machine (100) is used for a duration and in operating conditions corresponding to those of an uninterrupted mission the most detrimental with respect to said quantity of heat out of a set of missions in which said electromechanical machine (100) is likely to be used.

2. Electromechanical machine according to Claim 1, wherein materials involved in the construction of the functional part (10) are selected from among the materials that have a high specific heat, greater than 400 J/kg°C and preferably greater than 800 J/kg°C, so as to form a heat well capable of accumulating at least a substantial part of the quantity of heat **Emax.**

3. Electromechanical machine according to Claim 2, wherein the materials that have a high specific heat are arranged and geometrically configured so as to promote the heat exchanges between said materials and the internal volume.

4. Electromechanical machine according to Claim 1, wherein the tank is formed by an internal separator (232) determining, between said internal separator and a more outer separator of the wall (23), a volume of the tank (222), and determining, on the side of an inner face, a smaller volume (223) in which the functional part (10) is located.

5. Electromechanical machine according to one of the preceding claims, wherein the wall (23) of the insulating enclosure (21) comprises openings (25, 26) connecting the internal volume (22) with the outside of said insulating enclosure, said openings comprising valves and/or flapgates so as to control the circulation of fluids through said openings.

6. Electromechanical machine according to one of the preceding claims, wherein the wall (23) of the insulating enclosure (21) comprises openings (24, 27) passed through in a fluid-tight manner by at least one mechanical power transmission shaft (111) between the functional part (10) situated in said internal volume (22) and a space outside of said insulating enclosure and/or by electrical conductor cables.

7. Electromechanical machine according to Claim 6, wherein the mechanical transmission shaft or shafts (111) and/or the electrical conductor cables passing through the wall (23) of the insulating enclosure are produced in a material that has a thermal conduction less than 25 W/m°C.

8. Electromechanical machine according to one of the preceding claims, comprising means for controlling and monitoring the temperature of the internal volume (23) and/or the temperature of the windings made of superconductive material, said control and monitoring means comprising at least one temperature probe fixed to the functional part (10).

9. Aircraft comprising an electromechanical machine (100) according to one of the preceding claims.

10. Vehicle comprising an electromechanical machine (100) according to one of the preceding claims, said electrical machine being implemented as a propulsion engine of said vehicle.

11. Method for implementing an electromechanical machine (100) according to one of Claims 1 to 6 comprising a preliminary cooling step and comprising the steps of:

- connection, when the machine is in a static position, of an external cooling system capable of delivering a liquid at cryogenic temperature lower than the critical temperature **Tc** at one or more openings passing through the wall (23) of the insulating enclosure (21);
- filling of at least one volume (223) inside the insulating enclosure (21) containing the functional part (10) of the electromechanical machine (100), with the liquid at cryogenic temperature so as to immerse said functional part;
- when the temperature of the function part (10) is stabilized at the cryogenic temperature, drainage of the cryogenic liquid from said at least one volume inside the insulating enclosure (21) containing the functional part (10), then disconnection of the external cooling system such that the machine can be operated autonomously in terms of control of its superconductive operating temperature for a maximum duration corresponding to the given mission duration defined during the design of said electromechanical machine.

12. Method according to Claim 11, wherein a smaller volume (223) of the internal volume (22) of the insulating enclosure (21) in which the functional part (10) is included is filled with cryogenic fluid immersing said functional part as long as the temperature of said functional part is not stabilized at the cryogenic temperature and wherein said smaller volume is then purged of the cryogenic fluid that it contains.

13. Method according to Claim 11 or Claim 12, wherein the electromechanical machine (100) comprises a tank (222) inside the insulating enclosure (21), which tank is filled with cryogenic fluid before the disconnection of the external cooling system.

**Fig.1**

EP 2 936 666 B1

**Fig.2**

**Fig.3**

**EP 2 936 666 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1777800 A
- DE 19710501
- US 2010164309 A